Europäisches Patentamt

European Patent Office

Office européen des brevets

(19)

(11) Numéro de publication : **0 194 228**
**B1**

(12) **FASCICULE DE BREVET EUROPÉEN**

(45) Date de publication du fascicule du brevet :
**19.07.89**

(21) Numéro de dépôt : **86810085.0**

(22) Date de dépôt : **17.02.86**

(51) Int. Cl.⁴ : **H 02 G    9/06**

(54) Elément de protection de câbles électriques.

(30) Priorité : **28.02.85 FR 8503098**

(43) Date de publication de la demande :
**10.09.86 Bulletin 86/37**

(45) Mention de la délivrance du brevet :
**19.07.89 Bulletin 89/29**

(84) Etats contractants désignés :
**AT BE CH DE FR GB IT LI LU NL SE**

(56) Documents cités :
**DE–A– 2 304 852**
**DE–A– 2 626 200**
**DE–C–    394 695**
**DE–C–    929 907**
**DE–U– 7 142 310**
**FR–A– 2 241 894**

(73) Titulaire : **PLASTAG S.A.**
**CH-1349 Eclepens (CH)**

(72) Inventeur : **Schüpbach, Heinz**
**Les Esserts**
**CH-1030 Mex (CH)**

(74) Mandataire : **Nithardt, Roland**
**CABINET ROLAND NITHARDT Attn: Cabinet MOSER**
**& CIE Rue Edouard Verdan 15**
**CH-1400 Yverdon-les-Bains (CH)**

## Description

La présente invention concerne un élément de protection de câbles électriques comprenant deux coques de forme sensiblement semi-cylindrique, jointes l'une à l'autre suivant un plan axial de jonction au moyen d'organes d'assemblage disposés extérieurement à proximité des bords longitudinaux des deux coques pour former un élément tubulaire démontable autour d'au moins un câble se trouvant déjà en place, l'élément comportant une extrémité femelle et une extrémité mâle agencée pour être engagée dans l'extrémité femelle d'un élément identique adjacent et pour empêcher un déboîtement longitudinal desdits éléments.

Les câbles électriques enterrés ou placés dans des galeries, des gaines techniques renfermant une série de canalisations. etc. sont généralement protégés par une gaine tubulaire en matière synthétique, mise en place au préalable et dans laquelle on tire ensuite les câbles. Ultérieurement, cette gaine et éventuellement le câble lui-même peuvent être endommagés accidentellement et nécessiter des réparations. Cela se produit assez souvent avec les câbles enterrés, qui sont notamment endommagés par négligence à l'occasion de travaux d'excavation. D'autre part, il est parfois nécessaire d'ouvrir volontairement la gaine, pour réaliser une épissure ou une dérivation sur le câble.

Une méthode couramment appliquée consiste à fendre longitudinalement la gaine et à faire glisser un écarteur le long de cette fente pour l'entrouvrir pendant qu'on en extrait le câble ou qu'on l'y réintroduit. Toutefois, la manipulation de cet appareillage nécessite beaucoup de main-d'oeuvre et rend le travail plus difficile. En général, on scelle cette fente par application d'une bande adhésive, après l'achèvement du travail, ce qui constitue évidemment un point faible dans la gaine. Une autre méthode courante consiste à scier et enlever un tronçon de gaine afin d'intervenir plus facilement sur le câble. Dans ce cas, il est toujours difficile de rétablir la gaine de protection autour du câble lorsque celui-ci a été remis en état. Il ne s'agit pourtant de reconstituer la gaine que sur une faible longueur, comprise généralement entre quelques décimètres et quelques mètres. A cet effet, on a imaginé des éléments de protection pouvant être installés sur un câble qui se trouve déjà en place et permettant de reconstituer une gaine tubulaire. On connaît notamment par le DE-C-929 907 un élément tubulaire de protection constitué par deux coques identiques semi-cylindriques, pourvues de deux rebords extérieurs longitudinaux qui sont percés pour le passage de brides d'assemblage démontables. Cependant, les éléments de ce type présentent l'inconvénient de pouvoir coulisser longitudinalement par rapport à l'élément adjacent ou par rapport à la gaine primitive, faute de moyens appropriés pour le raccordement longitudinal.

Une solution à ce problème est proposée par le DE-A-2 304 852, qui décrit un élément tubulaire de protection formé de deux coques semi-cylindriques dont les bords longitudinaux ont des profils respectifs en forme de rainure et de crochet s'engageant dans cette rainure. Le raccordement longitudinal des éléments s'effectue par emboîtement. Chaque élément comporte une extrémité femelle renfermant un anneau tubulaire contenant un adhésif, et une extrémité mâle équipée d'une arête aiguë qui déchire cet anneau au moment de l'emboîtement, de sorte que l'adhésif se répand dans la zone d'emboîtement et assure après durcissement une liaison longitudinale durable. Ce système est toutefois relativement coûteux et délicat, et en outre il n'est pas démontable. De plus, la présence des organes d'accrochage dans l'épaisseur des coques nécessite d'épaissir les parois, donc de consommer plus de matière. Enfin la stabilité latérale et la rigidité des coques quand on les pose autour d'un câble et qu'on les accroche ensemble ne sont pas suffisantes.

Un élément.de protection du type indiqué en préambule est décrit dans le document DE-C-394695. Cet élément se compose de deux coques métalliques identiques, pourvues de pattes latérales perforées pour être assemblées par des boulons de manière à former un élément tubulaire. Les extrémités mâle et femelle de l'élément ont des surfaces sphériques pour former un joint à rotule avec l'élément adjacent ; c'est-à-dire qu'on obtient une gaine métallique tubulaire articulée qui résiste à la traction et qui évite donc que le câble soit lui même soumis à des tractions. On installe cette gaine autour du câble avant d'amener l'ensemble à son emplacement définitif, par exemple sur le fond de la mer. L'utilisation d'un tel élément pour reconstituer une gaine de câble comme on l'a décrit plus haut serait évidemment malcommode, même si l'élément était réalisé en matière synthétique. Les moyens d'assemblage à vis et les joints à rotule sont en effet très sensibles à la saleté qu'on peut rencontrer sur un chantier, notamment dans une excavation. En outre, la forme sphérique des extrémités des éléments ne permet pas un raccordement convenable à une gaine normale de câble.

Par conséquent, la présente invention a pour but de fournir un élément de protection simple et peu coûteux réalisé en matière synthétique et permettant de reconstituer facilement une gaine tubulaire démontable autour d'un câble se trouvant déjà en place, par exemple au fond d'une tranchée. La gaine constituée par ces éléments doit pouvoir supporter des efforts longitudinaux sans que les éléments se déboîtent, par exemple lors du tirage ultérieur d'un câble dans la gaine, et de préférence elle doit pouvoir s'adapter à un tracé courbe du câble.

Dans ce but, l'élément de protection selon la présente invention est caractérisé en ce que chaque coque est une pièce en matière synthétique moulée rigide ou semi-rigide sur laquelle lesdits organes d'assemblage sont des organes d'accrochage rapide, en ce qu'au moins l'une des coques comporte sur sa face extérieure au moins deux nervures transversales de raidissement définissant une surface d'appui qui est sensiblement parallèle au plan axial de jonction, en ce que l'extrémité femelle comporte une rainure transversale sur sa face intérieure, et l'extrémité mâle comporte sur sa face extérieure une nervure agencée pour s'engager dans ladite rainure de l'extrémité femelle de l'élément adjacent, et en ce que la largeur de ladite rainure transversale est sensiblement supérieure à la largeur de ladite nervure, de manière à assurer un jeu longitudinal et/ou un jeu angulaire entre les éléments adjacents emboîtés l'un dans l'autre.

De préférence, ledit jeu angulaire peut être égal ou supérieur à 5 degrés par rapport à l'axe longitudinal de l'élément.

Selon une première forme de réalisation, les organes d'accrochage rapide comprennent au moins une série de crochets flexibles disposés le long d'un bord longitudinal de l'une des coques et au moins une série correspondante d'arêtes d'accrochage, agencées pour coopérer avec ces crochets et disposées le long du bord correspondant de l'autre coque.

Selon une autre forme de réalisation, les organes d'accrochage rapide comprennent deux séries de pattes latérales rigides, disposées respectivement le long des deux bords longitudinaux des coques et comportant chacune au moins un orifice s'étendant perpendiculairement audit plan axial de jonction, lesdits orifices respectifs des deux coques à assembler étant disposés en regard les uns des autres, et des goupilles élastiques engagées de manière amovible dans les orifices des pattes latérales respectives des deux coques, pour les assembler d'une manière démontable. Au moins l'une des pattes latérales de l'une des coques peut comporter des ergots de guidage coopérant avec un bord d'une patte latérale correspondante de l'autre coque, pour positionner ces deux pattes l'une par rapport à l'autre.

Selon une troisième forme de réalisation, les organes d'accrochage rapide comprennent au moins une série de crochets fixes, comportant un évidement latéral en forme d'arc de cercle s'étendant sur plus de 180 degrés et disposé le long d'un bord longitudinal de l'une des coques, et au moins une série correspondante de barrettes cylindriques, disposées le long du bord correspondant de l'autre coque et agencées pour s'engager latéralement dans lesdits évidements des crochets.

Selon une quatrième forme de réalisation, lesdits organes d'accrochage comprennent une partie femelle en forme de gouttière ayant un profil intérieur évasé et un rebord d'accrochage rentrant, cette partie femelle s'étendant de manière continue ou discontinue le long d'un bord longitudinal de l'une des coques, et une partie mâle ayant un profil extérieur correspondant au profil intérieur de ladite partie femelle et comportant une arête d'accrochage agencée pour coopérer avec ledit rebord d'accrochage, cette partie mâle s'étendant de manière continue ou discontinue le long du bord correspondant de l'autre coque. De préférence, le profil intérieur de ladite partie femelle est trapézoïdal. Un joint compressible longitudinal peut être disposé dans la partie femelle.

De préférence, les deux coques constituant un élément selon l'invention sont identiques.

Afin d'assurer la stabilité de l'élément, au moins l'une des deux coques peut comporter sur sa face extérieure au moins deux nervures de support pourvues d'une face d'appui qui est sensiblement parallèle au plan axial de jonction.

La présente invention et ses avantages seront mieux compris à l'aide de la description de différentes formes de réalisation, donnée ci-dessous à titre d'exemple en référence aux dessins annexés, dans lesquels :

La figure 1 est une vue en plan d'une coque semi-cylindrique utilisable pour constituer un élément de protection, selon une première forme de réalisation de l'invention,

La figure 2 est une vue en coupe transversale suivant la ligne II-II de la fig. 1,

La figure 3 est une vue en plan, analogue à la fig. 1, d'une deuxième forme de réalisation,

La figure 4 est une vue en coupe transversale suivant la ligne IV-IV de la fig. 3,

La figure 5 est une vue en plan, analogue à la fig. 1, d'une troisième forme de réalisation,

La figure 6 est une vue en coupe transversale suivant la ligne VI-VI de la fig. 5,

La figure 7 est une vue en plan, analogue à la fig. 1, d'une quatrième forme de réalisation, et

La figure 8 est une vue en coupe transversale suivant la ligne VIII-VIII de la fig. 7.

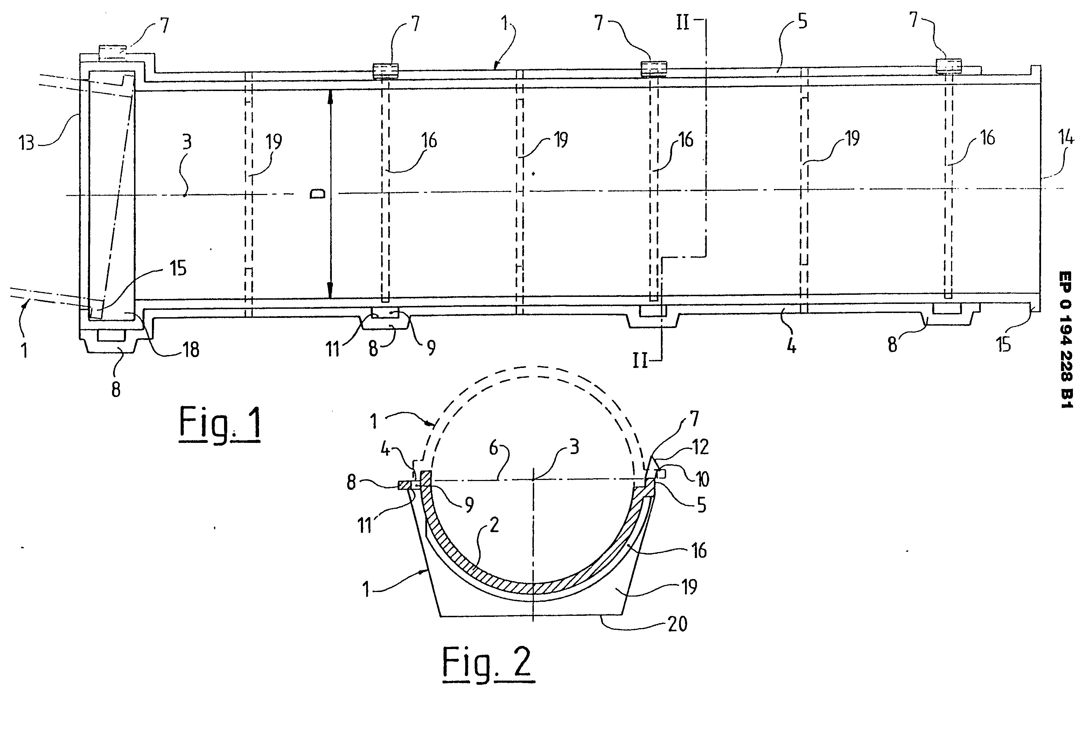

Les figures 1 et 2 représentent une première forme de réalisation d'une coque semi-cylindrique 1 utilisable pour former un élément tubulaire de protection comme le montre la fig. 2. La coque 1 comprend essentiellement une paroi 2 de forme semi-cylindrique, avec un axe longitudinal 3 et deux bords longitudinaux de jonction 4 et 5 disposés sensiblement dans un plan de jonction 6 renfermant l'axe 3. Les bords de jonction 4 et 5 présentent des profils respectifs qui se correspondent, de sorte qu'on peut réaliser un élément tubulaire de protection en assemblant la coque 1 avec une seconde coque 1 identique, représentée en traits interrompus sur la fig. 2.

Dans ce but, la coque 1 comporte, le long de ses bords de jonction 4 et 5, des organes d'accrochage rapide agencés pour permettre une fixation sûre, mais démontable, d'une coque sur l'autre. Dans la forme de réalisation illustrée par les figures 1 et 2, ces organes comprennent une série de crochets 7, régulièrement espacés le long du bord de jonction 5, et une série correspondante de pattes latérales 8 réparties le long du bord de jonction 4 et pourvue chacune d'une ouverture 9 dans laquelle peut s'engager un crochet 7 de la seconde coque 1. Sur sa face extérieure, le crochet 7 comporte un ergot latéral 10 agencé pour s'accrocher contre une arête d'accrochage 11 située le long d'un bord de l'ouverture 9. Le crochet 7 comporte en outre, entre son extrémité et l'ergot 10, une face inclinée 12 provoquant une flexion latérale du crochet en direction de l'axe 3, grâce à l'élasticité de la matière, quand on introduit le crochet dans l'ouverture 9. Dès qu'il a franchi l'arête 11, l'ergot latéral 10 est repoussé vers l'extérieur par l'élasticité du crochet 7, et il s'accroche ainsi à l'arête 11 de la patte latérale 8 dès que les bords respectifs 4 et 5 des deux coques 1 sont en contact. Ce type d'assemblage garantit un maintien irréprochable des deux coques 1 l'une contre l'autre. Ultérieurement, on peut décrocher facilement les crochets 7 en appuyant latéralement sur leur face inclinée 12 pour les faire fléchir et décrocher ainsi leur ergot 10.

Afin d'être assemblée longitudinalement avec d'autres coques identiques, la coque 1 comporte une extrémité femelle 13 et une extrémité mâle 14 agencée pour s'emboîter dans l'extrémité femelle d'un élément identique adjacent. L'extrémité mâle 14 comporte simplement une nervure 15 saillante sur la face extérieure de la paroi 2, à l'extrémité de cette paroi. En revanche, l'extrémité femelle 13 comprend une partie élargie, dans laquelle la paroi 2 de la coque a un rayon intérieur légèrement plus grand que le rayon extérieur de la nervure 15. L'extrémité de cette partie élargie est pourvue d'un rebord interne 17 qui délimite ainsi dans l'extrémité femelle une rainure interne 18 dans laquelle on peut loger la nervure 15 de l'extrémité mâle d'une autre coque 1. Cette nervure 15 peut buter soit contre le rebord 17, soit contre le bord opposé de la rainure 18, ce qui assure une transmission des efforts longitudinaux entre deux éléments consécutifs.

Dans l'exemple représenté, la rainure 18 présente une largeur qui est sensiblement plus grande que la largeur de la nervure 15. Cette différence de largeur correspond à un jeu longitudinal entre deux éléments consécutifs. Elle a en outre l'avantage de permettre un jeu angulaire entre ces deux éléments consécutifs, comme le montre la fig. 1. Par exemple, entre deux éléments présentant un diamètre intérieur D égal à 100 mm, avec un diamètre extérieur de la nervure 15 égal à 120 mm et un jeu longitudinal de 20 mm dans la rainure 18, la déviation angulaire maximale entre deux éléments consécutifs est égale à 9,6 degrés dans toutes les directions. Avec des coques d'une longueur utile de 500 mm, ce jeu angulaire permet donc de réaliser une gaine de protection sur des câbles présentant un tracé courbe dont le rayon est égal ou supérieur à 3 m. Pour des rayons plus petits, on peut notamment prévoir des coques plus courtes ou des coques courbes.

Afin de présenter une rigidité transversale suffisante, la paroi 2 de la coque 1 comporte sur sa face extérieure une série de nervures de renforcement 16, disposées de préférence dans les mêmes sections que les organes d'accrochage rapide 7 et 8. En outre, la coque 1 peut comporter avantageusement sur sa face extérieure au moins deux nervures de support 19 présentant sur leur tranche une face d'appui 20 qui est sensiblement parallèle au plan axial de jonction 6. Grâce à ces nervures de support, une première coque 1 disposée sous un câble repose dans une position stable.

Les coques constituant l'élément de protection selon l'invention peuvent être réalisées par moulage de toute matière synthétique utilisée pour la fabrication des gaines de protection de câbles, par exemple du polyéthylène ou du PVC.

L'utilisation d'un ou plusieurs éléments tubulaires de protection selon l'invention, pour reconstituer un tronçon d'une gaine de câble ayant été endommagée ou ayant dû être ouverte pour une intervention sur le câble, est particulièrement aisée. On installe tout d'abord une série de coques 1 emboîtées les unes dans les autres sur toute la longueur du tronçon, en les enfilant latéralement sous le câble. Les coques reposent alors sur leurs nervures de support 19, par exemple au fond d'une tranchée, de sorte que le plan de jonction 6 de leurs bords est sensiblement horizontal et que le ou les câbles à protéger peuvent être déposés commodément à l'intérieur des coques. On choisit de préférence des coques 1 dont le diamètre intérieur correspond au diamètre extérieur de la gaine ancienne et l'on effectue aux deux extrémités du tronçon un recouvrement de l'ancienne gaine par la nouvelle. On referme ensuite la nouvelle gaine en mettant en place une seconde série de coques 1 que l'on accouple sans difficultés aux coques inférieures au moyen des organes d'accrochage 7 et 8. Au besoin, ce nouveau tronçon de gaine pourra être ouvert ultérieurement sans difficulté.

Si nécessaire, le raccordement entre l'ancienne gaine et l'extrémité femelle 13 du dernier élément selon l'invention peut être amélioré à l'aide de deux joints semi-circulaires en élastomère, logés dans la rainure 18. De même, le raccordement entre l'ancienne gaine et l'extrémité mâle de la nouvelle gaine peut être pourvu d'un manchon à deux extrémités femelles, réalisé en deux coques analogues aux coques 1.

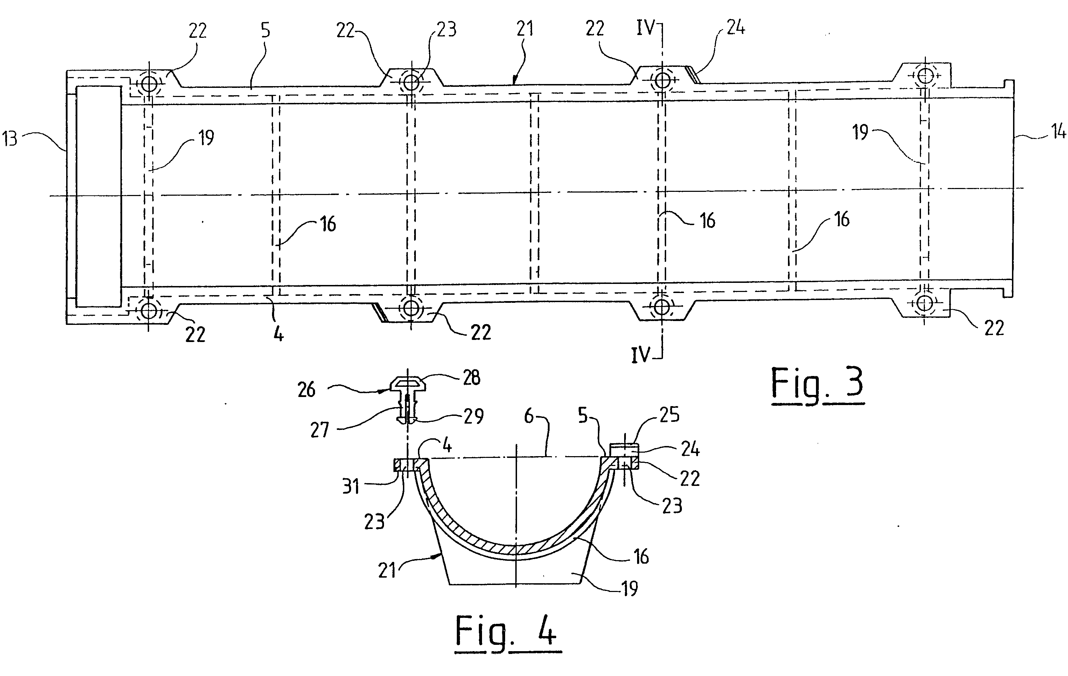

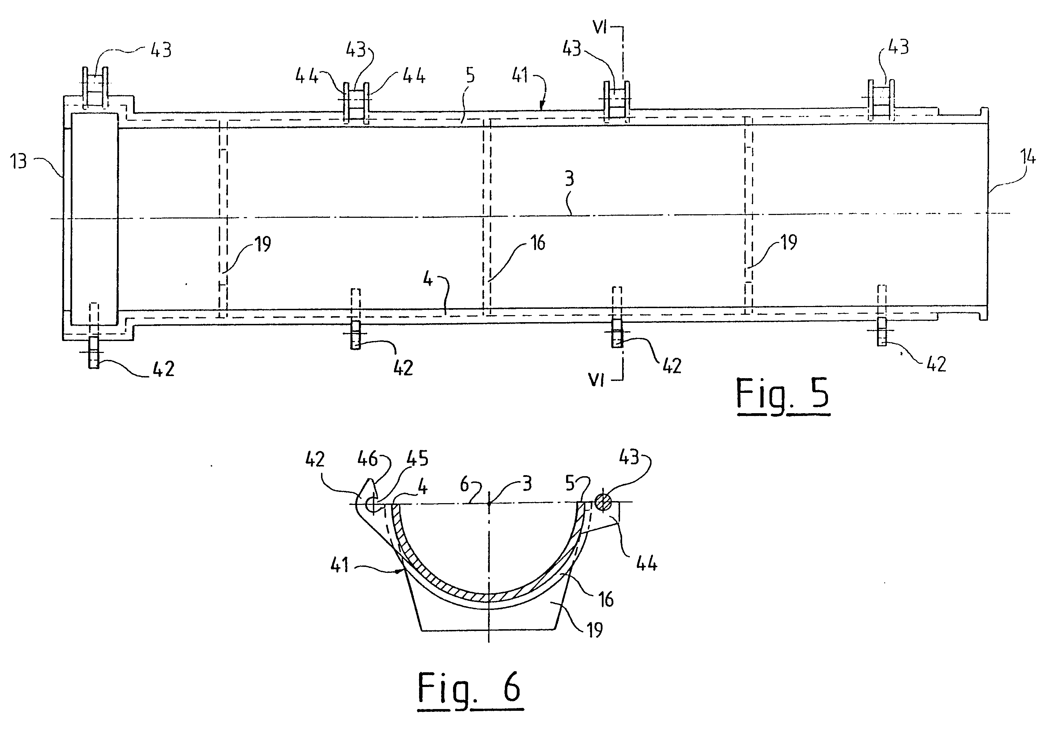

Les figures 3 et 4 représentent une deuxième forme de réalisation d'une coque semi-cylindrique 21 utilisable pour former un élément tubulaire de protection selon l'invention. La coque 21 est semblable à la coque 1, à l'exception des organes d'accrochage rapide. Dans le cas présent, ceux-ci comprennent deux séries de pattes latérales rigides 22, disposées respectivement les unes en face des autres le long des deux bords longitudinaux 4 et 5 définissant le plan axial de jonction 6. Chacune des pattes 22 comporte un orifice 23 perpendiculaire au plan de jonction 6. Certaines des pattes 22 comportent en outre un ergot de guidage 24 qui est saillant par rapport au plan de jonction 6, pour guider la seconde coque 21 en s'appuyant contre le bord de la patte 22 correspondante, au moment où l'on assemble deux coques pour former un élément de gaine. De plus, les ergots 24 comportent avantageusement un petit rebord 25 qui s'accroche à la patte 22 opposée pour assurer une fixation provisoire. Une fois que deux coques 21 sont ainsi positionnées l'une en face de l'autre pour former un élément tubulaire, on les fixe solidement l'une à l'autre en enfilant une goupille élastique 26 dans les orifices 7 de chacune des paires de pattes latérales 22, le long des deux bords des coques 21. Ces goupilles élastiques, également réalisées en matière synthétique, comportent une tige centrale 27 fendue axialement, dont une extrémité est solidaire d'une tête rigide 28 et dont l'autre extrémité comporte de chaque côté de la fente un ergot d'accrochage 29 agencé pour s'accrocher à l'arête inférieure 31 de l'orifice 23. En pinçant ultérieurement cette extrémité de la goupille 26, on peut facilement enlever la goupille pour ouvrir l'élément de protection.

Pour le reste, la coque 21 est semblable à la coque 1 décrite précédemment et elle est utilisable de la même manière.

Les figures 5 et 6 représentent une troisième forme de réalisation d'une coque semi-cylindrique 41 utilisable pour former un élément tubulaire de protection selon l'invention. Dans ce cas également, la coque 41 ne diffère de la coque 1 décrite plus haut que par ses organes d'accrochage rapide. Ceux-ci sont constitués par une série de crochets fixes 42, répartis le long d'un bord longitudinal 4 de la coque 41 et disposés dans des plans transversaux, et une série correspondante de barrettes cylindriques 43 réparties en face des crochets 42 le long de l'autre bord longitudinal 5 de la coque. Les barrettes 43 sont orientées dans le sens axial et elles sont portées chacune par une paire de pattes transversales 44. Pour s'engager facilement sur les barrettes 43 de la coque 41 opposée, les crochets 42 comportent un évidement 45 en forme d'arc de cercle s'étendant sur un peu plus de 180 degrés. Au-dessus de cet évidement, leur face 46 orientée vers l'axe 3 de la coque est inclinée par rapport à la verticale, quand le plan de jonction 6 est horizontal.

Pour assembler deux coques 41 en vue de former un élément de gaine, on approche d'abord le bord longitudinal 4 de l'une des coques, équipé de crochets 42, du bord 5 de l'autre coque, équipé des barrettes 43, et l'on force ces barrettes à pénétrer latéralement dans les évidements 45 des crochets. Ensuite, on presse les coques l'une contre l'autre pour rapprocher les deux autres bords. Les faces inclinées 46 de la seconde série de crochets 42 s'appuient alors contre les barrettes 43 correspondantes, ce qui pousse élastiquement le bord 4 de la coque supérieure vers l'extérieur. Ensuite, quand toutes les barrettes 43 se sont introduites dans les évidements 45 des crochets, la coque supérieure reprend sa forme, ce qui assure un accrochage solide des crochets 42 sur les barrettes 43. Cet assemblage peut être démonté ultérieurement en tirant les crochets 42 vers l'extérieur le long d'un des côtés de l'élément. Pour le reste, la coque 41 est semblable à la coque 1 décrite plus haut et elle est utilisable de la même manière.

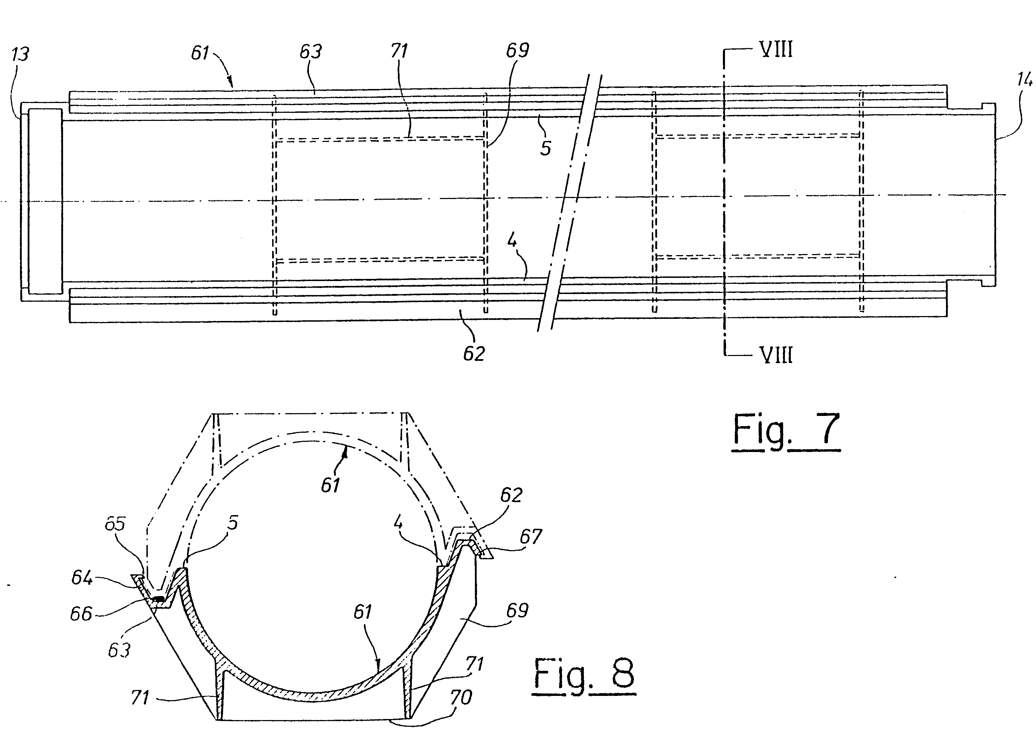

Les figures 7 et 8 illustrent une quatrième forme de réalisation d'un élément selon l'invention, constitué par deux coques semi-cylindriques 61 assemblées comme le montre la figure 8. La coque 61 comporte une extrémité femelle 13 et une extrémité mâle 14 qui sont semblables à celles des exemples précédents. En revanche, les organes d'accrochage rapide sont différents ; ils sont continus le long des deux bords longitudinaux 4 et 5 et comprennent respectivement le long de ces bords une partie mâle 62 et une partie femelle 63 agencée pour recevoir la partie mâle 62 de la coque opposée. La partie femelle 63 a la forme d'une gouttière ayant un profil intérieur trapézoïdal, évasé en direction de la coque opposée. La paroi extérieure 64 de cette gouttière comporte, le long de son bord libre, un rebord rentrant 65. La partie mâle 62 présente un profil extérieur trapézoïdal qui correspond au profil intérieur de la partie femelle 63, pour être logée dans celle-ci. De préférence, ce profil est un peu moins haut que celui de la partie femelle, pour qu'on puisse placer au fond de cette dernière un joint longitudinal compressible 66. Lorsqu'on introduit la partie mâle 62 dans la partie femelle 63, ses faces extérieures inclinées jouent le rôle d'un coin et repoussent le rebord 65 en fléchissant la paroi extérieure 64 de la partie femelle, puis l'arête extérieure 67 de la partie mâle s'accroche sous le rebord 65, ramené par l'élasticité de la matière. Il est évident que cet assemblage est facilement démontable.

On remarque que les organes d'accrochage 62 et 63 permettent de réaliser une gaine ayant une bonne étanchéité. Ils accroissent également la rigidité du profil, ce qui facilite l'utilisation de coques relativement longues, par exemple de l'ordre de 1 mètre. D'autre part, la forme trapézoïdale de ces organes facilite le démoulage de la coque lors de la fabrication. Un autre avantage est le fait que l'on peut fabriquer, sans transformation importante du moule, des coques ayant des organes d'accrochage 62 et 63 discontinus, par exemple des organes de 2 centimètres de longueur espacés d'environ 5 centimètres, ce qui permet une économie de matière.

Comme dans le cas décrit plus haut, la coque 61 est pourvue de nervures extérieures 69 qui raidissent la coque et les organes d'accrochage et dont les bords inférieurs définissent une surface d'appui horizontale 70, en combinaison avec des nervures longitudinales 71. La disposition et les dimensions de ces nervures peuvent être déterminées à volonté pour obtenir une rigidité optimale.

Il convient de remarquer que des éléments de protection selon la présente invention ne trouvent pas leur application uniquement pour des réparations. Du fait qu'ils peuvent être posés après le câble et qu'ils permettent de gainer un câble dont le tracé est courbe, on peut aussi les utiliser avantageusement comme gaine initiale, dans des zones ou le tracé du câble présente de fortes courbures. En effet, il est toujours difficile de tirer les câbles dans des gaines présentant un tracé très sinueux. On peut alors interrompre la gaine du câble dans les parties courbes du tracé et y passer des poulies de guidage lors du tirage du câble, puis gainer le câble au moyen des éléments de protection selon l'invention, dont les emboîtements garantissent le maintien ultérieur de la continuité de la gaine.

Les bords de jonction 4 et 5 des coques peuvent présenter un profil transversal en gradins, assurant un centrage exact de chaque coque par rapport à l'autre.

## Revendications

1. Elément de protection de câbles électriques, comprenant deux coques (1, 21, 41, 61) de forme sensiblement semi-cylindrique, jointes l'une à l'autre suivant un plan axial de jonction (6) au moyen d'organes d'assemblage disposées extérieurement à proximité des bords longitudinaux des deux coques pour former un élément tubulaire démontable autour d'au moins un câble se trouvant déjà en place, l'élément comportant une extrémité femelle (13) et une extrémité mâle (14) agencée pour être engagée dans l'extrémité femelle d'un élément identique adjacent, et pour empêcher un déboîtement longitudinal desdits éléments, caractérisé en ce que chaque coque (1, 21, 41, 61) est une pièce en matière synthétique moulée rigide ou semi-rigide sur laquelle lesdits organes d'assemblage sont des organes d'assemblage rapide (7, 8 ; 22, 26 ; 42, 43 ; 62, 63), en ce qu'au moins l'une des deux coques comporte sur sa face extérieure au moins deux nervures transversales de raidissement (19, 69) définissant une surface d'appui (20, 70) qui est sensiblement parallèle au plan axial de jonction, en ce que l'extrémité femelle (13) comporte une rainure transversale (18) sur sa face intérieure, et l'extrémité mâle (14) comporte sur sa face extérieure une nervure (15) agencée pour s'engager dans ladite rainure de l'extrémité femelle de l'élément adjacent, et en ce que la largeur de ladite rainure transversale (18) est sensiblement supérieure à la largeur de ladite nervure (15), de manière à assurer un jeu longitudinal et/ou un jeu angulaire entre les éléments adjacents emboîtés l'un dans l'autre.

2. Elément selon la revendication 1, caractérisé en ce que ledit jeu angulaire est égal ou supérieur à 5 degrés de chaque côté de l'axe longitudinal de l'élément.

3. Elément selon la revendication 1, caractérisé en ce que lesdits organes d'accrochage rapide comprennent au moins une série de crochets flexibles (7) disposés le long d'un bord longitudinal (5) de l'une des coques (1) et au moins une série correspondante d'arêtes d'accrochage (11), agencées pour coopérer avec ces crochets et disposées le long du bord correspondant (4) de l'autre coque.

4. Elément selon la revendication 1, caractérisé en ce que lesdits organes d'accrochage rapide comprennent deux séries de pattes latérales rigides (22), disposées respectivement le long des deux bords longitudinaux des coques (21) et comportant chacune au moins un orifice (23) s'étendant perpendiculairement audit plan axial de jonction (6), lesdits orifices respectifs des deux coques à assembler étant disposés en regard les uns des autres, et des goupilles élastiques (26) engagées de manière amovible dans lesdits orifices des pattes latérales respectives des deux coques, pour les assembler d'une manière démontable.

5. Elément selon la revendication 4, caractérisé en ce qu'au moins l'une desdites pattes latérales (22) de l'une des coques comporte des ergots de guidage (24) coopérant avec un bord d'une patte latérale correspondante de l'autre coque, pour positionner ces deux pattes l'une par rapport à l'autre.

6. Elément selon la revendication 1, caractérisé en ce que lesdits organes d'accrochage rapide comprennent au moins une série de crochets fixes (42), comportant un évidement latéral (45) en forme d'arc de cercle s'étendant sur plus de 180° et disposés le long d'un bord longitudinal de l'une desdites coques (41), et au moins une série correspondante de barrettes cylindriques (43), disposées le long du bord correspondant de l'autre coque et agencées pour s'engager latéralement dans lesdits évidements des crochets.

7. Elément selon la revendication 1, caractérisé en ce que lesdits organes d'accrochage rapide comprennent une partie femelle (63) en forme de gouttière ayant un profil intérieur évasé et un rebord d'accrochage rentrant (65), cette partie femelle s'étendant de manière continue ou discontinue le long d'un bord longitudinal (5) de l'une des coques (61), et une partie mâle (62) ayant un profil extérieur correspondant au profil intérieur de ladite partie femelle et comportant une arête d'accrochage (67) agencée pour coopérer avec ledit rebord d'accrochage (65), cette partie mâle s'étendant de manière continue ou discontinue le long du bord correspondant (4) de l'autre coque.

8. Elément selon la revendication 7, caractérisé en ce que le profil intérieur de ladite partie femelle (63) est trapézoïdal.

9. Elément selon la revendication 7 ou 8, caractérisé en ce que lesdites parties mâles et femelles (62 et 63) des organes d'accrochage sont continues et en ce qu'un joint compressible longitudinal (66) est disposé dans la partie femelle.

10. Elément selon la revendication 1, caractérisé en ce que lesdites nervures transversales (69) d'une coque sont reliées entre elles par des nervures longitudinales de raidissement (71).

11. Elément selon l'une quelconque des revendications précédentes, caractérisé en ce que les deux coques (1, 21, 41, 61) constituant un élément sont identiques.

## Claims

1. Protective element for electric cables, comprising two shells (1, 21, 41, 61) having a substantially semi-cylindrical shape joined each with the other along a joining axial plane (6) by coupling means outwardly disposed close to the longitudinal sides of the two shells to make a tubular element detachable around at least one cable already in position, the element comprising a female end (13) and a male end (14) arranged so as to fit into the female end of an adjacent identical element and to prevent a longitudinal disconnection of said elements, characterized in that each shell (1, 21, 41, 61) is made of one piece of a moulded synthetic material rigid or semi-rigid on which said coupling means are rapid coupling means (7, 8 ; 22, 26 ; 42, 43 ; 62, 63), in that at least one of the two shells comprises on its external face at least two transversal stiffening ribs (19, 69) forming a bearing surface (20, 70) which is substantially parallel to the joining axial plane, in that the female end (13) comprises a transversal rib (18) on its internal face and the male end (14) comprises on its external face a rib (15) arranged so as to fit into said rib of the female end of the adjacent element, and in that the width of said transversal rib (18) is substantially superior to the width of said rib (15) so as to assure a longitudinal or/and an angular play between the adjacent elements connected one with the other.

2. Element according to claim 1, characterized in that said angular play is equal or superior to 5 degrees of each side of the longitudinal axis of the element.

3. Element according to claim 1, characterized in that said quickly coupling means comprise at least one series of flexible hooks (7) disposed along a longitudinal side (5) of one of the shells (1) and at least one corresponding series of sharp coupling edges (11) provided to cooperate with these hooks and disposed along the corresponding side (4) of the other shell.

4. Element according to claim 1, characterized in that said rapid coupling means comprise two series of rigid lateral fixing lugs (22) respectively disposed along the two longitudinal sides of the shells (21) each one comprising at least one opening (23) extending perpendicularly to said axial junction plane, said respective openings of the two shells to be joined being disposed each one in front of the other, and elastic pins (26) fitted in a movable manner in said openings of the respective lateral fixing lugs of the two shells, so that they are coupled in a detachable manner.

5. Element according to claim 4, characterized in that at least one of said lateral fixing lugs (22) of one of the shells comprise guiding catches (24) working with one side of a corresponding lateral fixing lug of the other shell, so as to position these two fixing lugs one with regard to the other.

6. Element according to claim 1, characterized in that said rapid coupling means comprise at least one series of stationary hooks (42) comprising a lateral recess (45) in the form of an arc of a circle extending by more than 180° and disposed along a longitudinal side of one of said shells (41) and at least one corresponding series of cylindrical strips (43) disposed along the corresponding side of the other shell and arranged to be laterally fit in said recesses of the hooks.

7. Element according to claim 1, characterized in that said rapid coupling means comprise a female part (63) having a gutter shape with an internal splayed section and a reentering coupling edge (65), this female part extending in a continuous or discontinuous manner along a longitudinal side (5) of one of the shells (61), and a male part (62) having an external profile corresponding to the internal profile of said female part and comprising a sharp coupling edge (67) arranged to work with said coupling edge (65), this male part extending in a continuous or discontinuous manner along the corresponding side (4) of the other shell.

8. Element according to claim 7, characterized in that the internal profile of said female part (63) is trapezoidal.

9. Element according to claim 7 or 8, characterized in that said male and female parts (62 and 63) of coupling means are continuous and in that a longitudinal compressible joint (66) is positioned in the female part.

10. Element according to claim 1, characterized in that said transversal ribs (69) of a shell are joined to each other by longitudinal stiffening ribs (71).

11. Element according one of the preceding claims, characterized in that the two shells (1, 21, 41, 61) constituting one element are identical.

## Patentansprüche

1. Element zum Schutz von elektrischen Kabeln, bestehend aus zwei Schalen (1, 21, 41, 61) von etwa halbzylindrischer Form, die miteinander längs einer axialen Verbindungsebene (6) mittels äußerlich in der Nähe der Längsränder der zwei Schalen angebrachter Verbindungseinrichtungen aneinandergefügt sind, um ein rohrförmiges, demontierbar um mindestens ein bereits verlegtes Kabel anzubringendes Bauteil zu bilden, wobei das Element ein Ende mit Rücksprung (13) und ein Ende mit Vorsprung (14) aufweist, das so ausgebildet ist, daß es in das mit Rücksprung versehene Ende eines identischen benachbarten Elementes einfügbar ist und um eine gegenseitige Verschiebung der Elemente in Längsrichtung zu verhindern, dadurch gekennzeichnet, daß jede Schale (1, 21, 41, 61) ein Teil aus steifem oder halbsteifem gegossenem synthetischem Werkstoff ist, an welcher die Verbindungseinrichtungen Schnellverbindungseinrichtungen (7, 8 ; 22, 26 ; 42, 43 ; 62, 63) sind, daß mindestens eine der zwei Schalen auf ihrer Außenseite mindestens zwei Querrippen (19, 69) zur Versteifung aufweist, die eine Auflagefläche (20, 70) bieten, welche etwa parallel zur axialen Verbindungsebene steht, daß das mit Rücksprung versehene Ende (13) auf seiner Innenseite eine Querrille (18), und das mit Vorsprung versehene Ende (14) auf seiner Außenseite einen Bund aufweist, welcher in die vorgenannte Rille des mit Rücksprung versehenen Endes des benachbarten Elementes eingreift, und daß die Breite der Querrille (18) etwas größer ist als die Breite des Bundes, um ein Längsspiel und/oder eine Winkelabweichung zwischen den ineinandergesteckten benachbarten Bauteilen zu gewährleisten.

2. Element nach Anspruch 1, dadurch gekennzeichnet, daß die Winkelabweichung gleich oder größer als 5° nach jeder Seite der Längsachse des Elementes ist.

3. Element nach Anspruch 1, dadurch gekennzeichnet, daß die Schnellverbindungseinrichtungen mindestens eine Serie von biegsamen entlang eines Längsrandes (5) einer der Schalen (1) angeordneten Haken (7) aufweisen und mindestens eine entsprechende Serie von Einhängekanten (11), die zusammen mit den Haken zu verwenden sind und entlang des entsprechenden Randes (4) der anderen Schale liegen.

4. Element nach Anspruch 1, dadurch gekennzeichnet, daß die Schnellverbindungseinrichtungen zwei Serien von steifen seitlichen Ansätzen (22) aufweisen, die jeweils entlang der zwei Längsränder der Schalen (21) angeordnet sind, wobei jeder mindestens eine sich senkrecht zur axialen Verbindungsebene (6) erstreckende Öffnungen (23) hat und die jeweiligen Öffnungen der zwei zusammenzufügenden Schalen einander gegenüber zu liegen kommen, des weiteren entfernbar in die Öffnungen der seitlichen Ansätze der jeweiligen Schalen eingesetzte elastische Stifte (26), um die Schalen demontierbar zusammenzufügen.

5. Element nach Anspruch 4, dadurch gekennzeichnet, daß mindestens einer der seitlichen Ansätze (22) einer der Schalen Führungsnasen (24) aufweist, die als Anschlag für einen Rand eines entsprechenden seitlichen Ansatzes der anderen Schale dienen, um diese zwei Ansätze gegeneinander zu positionieren.

6. Element nach Anspruch 1, dadurch gekennzeichnet, daß die Schnellverbindungseinrichtungen mindestens eine Serie von ortsfesten Haken (42) aufweisen, die eine seitliche Aussparung (45) in Form eines sich über mehr als 180° erstreckenden Kreisbogens haben und entlang eines Längsrandes einer der Schalen (41) angeordnet sind, sowie mindestens eine entsprechende Serie von zylindrischen Stegen (43), die entlang des entsprechenden Randes der anderen Schale angeordnet sind und dazu dienen, sich seitlich in die Aussparungen der Haken einzufügen.

7. Element nach Anspruch 1, dadurch gekennzeichnet, daß die Schnellverbindungseinrichtungen eine Stelle mit Rücksprung (63) in Form einer Rinne mit konischem Innenprofil und mit einer eingezogenen Randleiste (65) zum Einhaken aufweisen, wobei sich diese zurückspringende Stelle durchgehend oder unterbrochen entlang eines Längsrandes (5) einer der Schalen (61) erstreckt, sowie eine Stelle mit Vorsprung (62), welche ein Außenprofil hat, das dem Innenprofil der Stellen mit Rücksprung entspricht und der eine Kante zum Festhaken (67) aufweist, die dazu dient, mit der Randleiste zum Einhaken (65) zusammenzuwirken, wobei sich diese vorspringende Stelle durchgehend oder unterbrochen entlang des entsprechenden Randes (4) der anderen Schale erstreckt.

8. Element nach Anspruch 7, dadurch gekennzeichnet, daß das Innenprofil der Stelle mit Rücksprung (63) trapezförmig ist.

9. Element nach Anspruch 7 oder 8, dadurch gekennzeichnet, daß die vorspringenden und zurückspringenden Stellen (62 und 63) der Verbindungseinrichtungen durchlaufend sind und daß man eine nachgiebige Längsdichtung (66) in die Stelle mit Rücksprung einlegt.

10. Element nach Anspruch 1, dadurch gekennzeichnet, daß die Querrippen (69) einer Schale untereinander durch Längsversteifungsrippen (71) verbunden sind.

11. Element nach irgend einem der obigen Ansprüche, dadurch gekennzeichnet, daß die zwei ein Element bildenden Schalen (1, 21, 41, 61) identisch sind.

Fig. 1

Fig. 2

EP 0 194 228 B1

_Fig. 3_

_Fig. 4_

EP 0 194 228 B1

Fig. 5

Fig. 6

Fig. 7

Fig. 8